# EUROPEAN PATENT SPECIFICATION

(11) **EP 1 526 064 B1**
(45) Date of publication and mention of the grant of the patent: **19.06.2013**
(21) Application number: 04024953.4
(22) Date of filing: 20.10.2004
(51) Int. Cl.: B62J 25/00, B62J 17/00, B62J 37/00, B62K 11/00

(54) **Scooter type motorcycle**
Scooter
Scooter

(30) Priority: 20.10.2003 JP 2003359488
(43) Date of publication of application: 27.04.2005
(73) Proprietor: Yamaha Hatsudoki Kabushiki Kaisha, Iwata-shi, Shizuoka-ken (JP)
(72) Inventor: Koike, Munetaka, Iwata-shi, Shizuoka-ken (JP)
(74) Representative: Grünecker, Kinkeldey, Stockmair & Schwanhäusser

(56) References cited:
- EP-A1- 0 755 819
- EP-A2- 0 952 074
- EP-A2- 1 172 289
- EP-A2- 1 275 830
- DE-A1- 3 617 073
- US-A- 4 807 472

## Description

The present invention relates to a scooter type motorcycle according to the preamble of independent claim 1. **Such a scooter type motorcycle can be taken from the prior art document** EP 0 755 819 A1**.**

Conventionally, scooter type motorcycles of this kind also have a reservoir tank which is attached to an accessible location at an exterior of a body thereof.

Besides, it is known that a reservoir tank connected to a radiator of a motorcycle, not being of the scooter type, is attached directly to a body frame, as it is disclosed, e.g. in JP-A-5-213252. This reservoir tank is disposed below a pivot shaft supporting a rear arm and attached to a cross member of a body frame, which is provided so as to extend in a width direction below this pivot shaft, via a bracket. This bracket is formed so as to project downward from the cross member. A projecting piece for attachment, which is provided in the reservoir tank protrudingly toward the rear of the body, is attached to the cross member by bolts for attachment.

In this way, since the reservoir tank is positioned in the vicinity of a lowest position of the body, it becomes less likely that the exteridr of the body is spoiled by the reservoir tank. However, since the reservoir tank, which is a relatively small component, is attached in a low position of the body frame of the motorcycle, there is an inconvenience in that a worker is forced to take an unnatural posture at the time of attachment work, and workability of this attachment work is low.

Therefore, it is an object of the invention to provide an improved scooter type motorcycle, wherein the attachment work for a reservoir tank is facilitated and manufacturing costs can be reduced.

**According to the present invention said object is solved by scooter type motorcycle having the features of independent claim 1. Preferred embodiments are laid down in the dependent claims.**

For a scooter type motorcycle of the above kind, this object is solved in an inventive manner in that a reservoir tank for storing a cooling liquid is housed within the footrest.

The reservoir tank is attached to the under cover, and a water supply portion of the reservoir tank is covered to the outside of the motorcycle by a detachable cover which forms part of the foot board. **Preferably, said detachable** cover covers a battery box to the outside.

Further, preferably a projecting piece for attachment of the reservoir tank to the motorcycle is provided thereon and protrudingly in a longitudinal direction of a motorcycle body, the projecting piece being attached to a supporting piece, which is formed on a bottom wall of the under cover so as to project upward. Furthermore, preferably the projecting piece and a bearing surface for attachment of the supporting piece are inclined in a lateral direction of the motorcycle and/or tank body.

Still further, preferably an attachment means, in particular a bolt, is provided for attachment of the reservoir tank to the under cover, wherein preferably the attachment means is mounted from an inner side of the under cover in a direction towards an outer side of the under cover, and/or wherein an end portion of the attachment means, to which an attachment tool is applicable, is directed to an inner side of the under cover.

Moreover, preferably an opening for visual recognition of storage capacity of the reservoir tank is formed on a sidewall opposed to the reservoir tank in the under cover, and/or in that a level gauge indicating a position of an upper surface of a cooling liquid within the reservoir tank is provided at an outer wall of the reservoir tank, preferable so as to be visible through an opening formed in a sidewall of an under cover of the motorcycle.

Also, preferably a water storage portion of the reservoir tank is formed in an L-shape, in particular if seen in a cross-sectional view of the motorcycle.

According to a preferred embodiment, a lower end of the reservoir tank extends below rear frames of a body of the motorcycle, preferably being positioned in a dead space formed between the rear frames and the under cover.

According to a further preferred embodiment, a water supply pipe is integrally formed at an upper end of the reservoir tank, the water supply pipe comprising a water supply part which is closable by a preferably detachable cap.

According to a furthermore preferred embodiment, a recessed groove for holding a main harness is formed on an inner side wall of the reservoir tank.

Further preferred embodiments of the invention are subject to the respective subclaims.

In the following, the invention will be described in greater detail by means of preferred embodiments thereof in conjunction with the accompanying drawings, wherein:
- Fig. 1: is a side view of a scooter type motorcycle including a reservoir tank according to the invention;
- Fig. 2: is a plan view showing a footrest in enlargement;
- Fig. 3: is a side view showing a principal part in enlargement;
- Fig. 4: is a plan view showing the principal part in enlargement;
- Fig. 5: is a sectional view along line V-V in Fig. 3;
- Fig. 6: is a diagram showing a pipe holder of an under cover; and
- Fig. 7: is a side view showing an opening for visual recognition of storage capacity.

In these figures, reference numeral 1 denotes the scooter type motorcycle (hereinafter simply referred to as scooter) according to this embodiment. This scooter 1 has a footrest 4 provided between a front wheel 2 and a rear wheel 3 so as to form a low floor and drives the rear wheel 3 with a unit swing type power unit 5 to run.

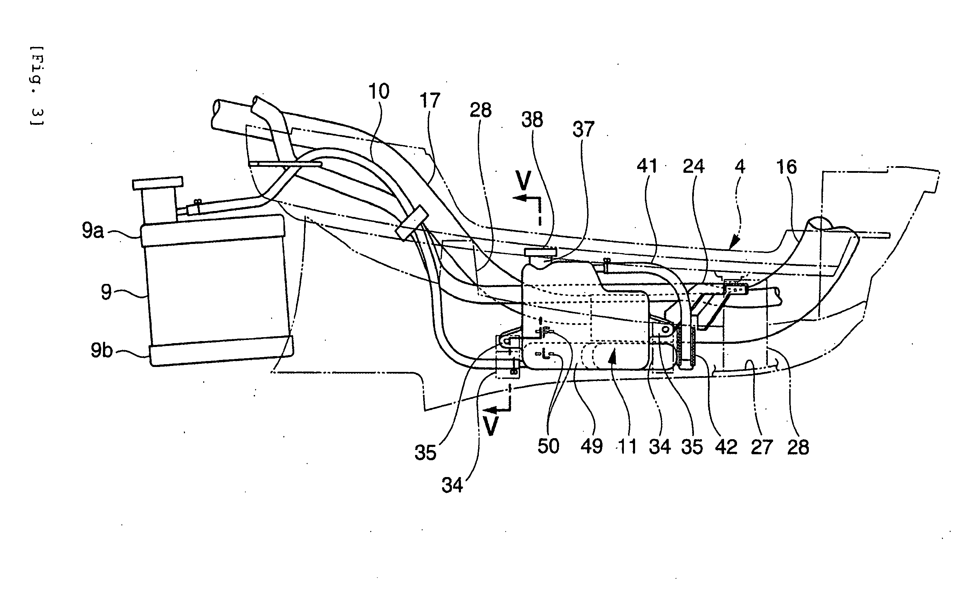

The power unit 5 includes a water-cooled four-cycle single cylinder engine 6 and is supported on a body frame 7 to be described later so as to freely swing in the vertical direction. This engine 6 is constituted such that an axis of a cylinder 8 is oriented in the longitudinal direction of the body. Although not shown in the figures, a fan is provided at an end on a body right side of a crank shaft, and a V belt continuously variable transmission for rear wheel drive is provided at an end on a body left side. A radiator 9 (see Fig. 3) is provided beside the fan, that is, at the end on the body right side of this engine 6. This radiator 9 has a structure in which cooling water flows from an upper tank 9a to a lower tank 9 and is connected to a cooling water passage of the engine 6 by a not-shown cooling water hose. A reservoir tank 11 is connected to the upper tank 9a of this radiator 9 via a reservoir pipe 10.

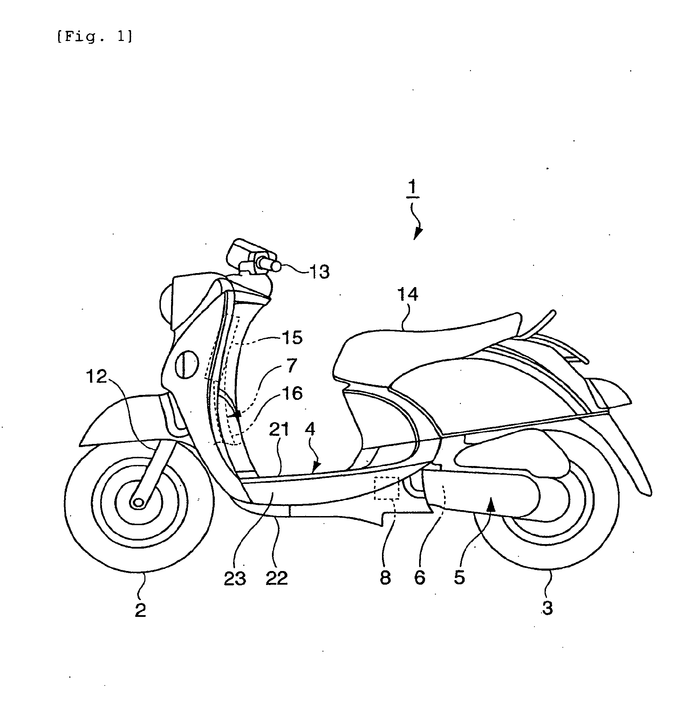

In Fig. 1, reference numeral 12 denotes a front fork; 13, a steering handlebar; and 14, a seat.

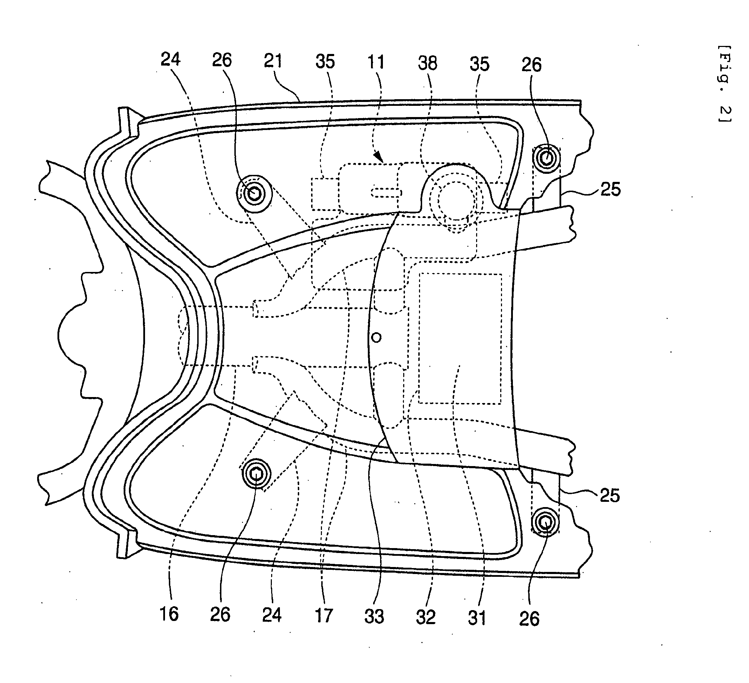

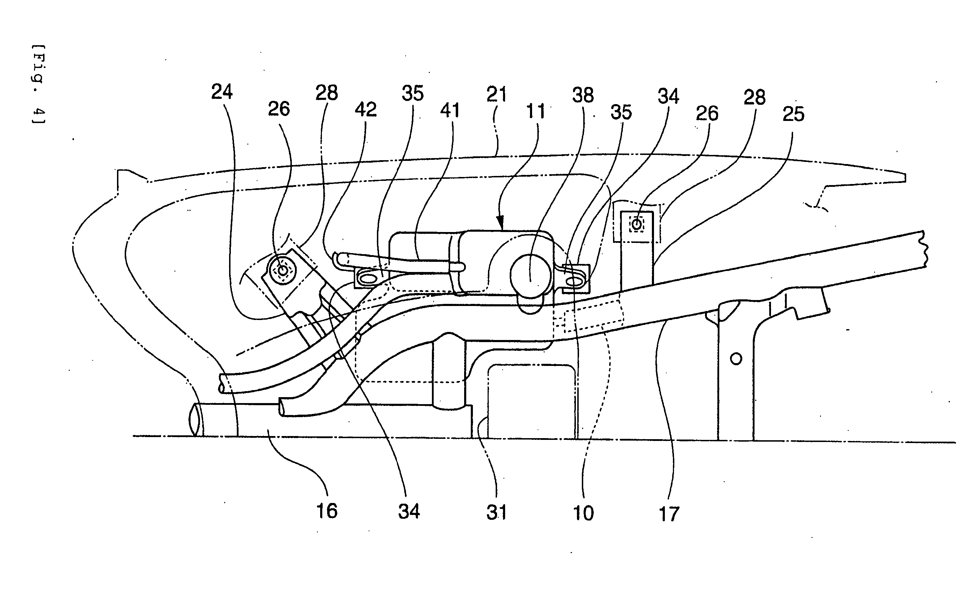

The body frame 7 includes a head pipe 15 that supports the front fork 12 so as to be steered freely, one down tube 16 that extends from this head pipe 15 to the footrest 4, and a pair of left and right rear frames 17 (see Figs. 2 and 4) that are connected to a rear end of this down tube 16. The rear end of the down tube 16 is extended to a part below the footrest 4 to be described later. As shown in Fig. 3, front ends of the rear frames 17 are formed so as to extend in the longitudinal direction of a body inner side the footrest 4 and bend in the vicinity of the rear end of the footrest 4 to incline upward to the rear.

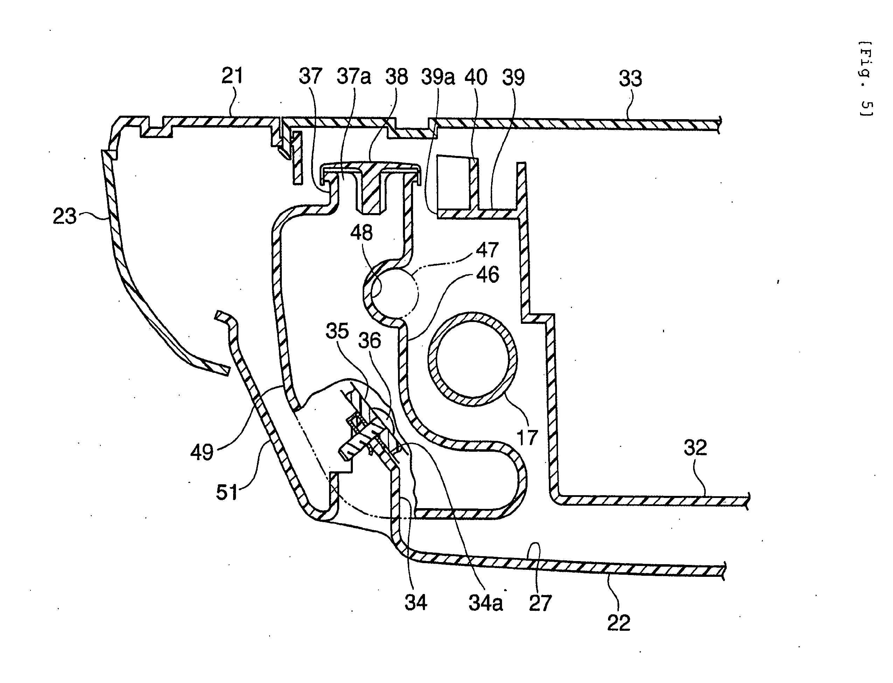

As shown in Figs. 1 and 5, the footrest 4 includes a foot board 21 for holding feet of a rider, an under cover 22 that covers this foot board 12 from the bottom thereof, and a side moll 23 that covers both sides of both the members from lateral directions. In the inside of this footrest 4, a space for housing the rear end of the down tube 16, the front ends of the rear frames 17, the reservoir tank 11 to be described later, and the like is formed.

As shown in Figs. 2 and 4, the foot board 21 and the under cover 22 are attached to brackets 24 and 25, which are protrudingly provided in the rear frames 17, by bolts for attachment 26. To describe this more in detail, the foot board 21 is attached to the brackets 24 and 25 by the bolts for attachment 26 in a state in which the foot board 21 is placed on the brackets 24 and 25. As shown in Fig. 3, in the under cover 22, a stay for attachment 28 is integrally formed so as to extend upward from a bottom wall 27. A flat portion of an upper end of this stay for attachment 28 is attached to the brackets 24 and 25 by the bolts for attachment 26 together with the foot board 21 in a state in which the flat portion is sandwiched between the brackets 24 and 25 and the footboard 21.

As shown in Fig. 2, in the foot board 21 according to this embodiment, a battery box 32 (see Fig. 5) housing a battery 31 is integrally formed at a rear end thereof. This battery box 32 is formed in a box shape opening upward, and an opening at an upper end thereof is closed by a lid denoted by reference numeral 33 in Fig. 2. This lid 33 is detachably attached to the foot board 21. A cover referred to in the invention is constituted by this lid 33.

As shown in Figs. 3 to 5, the reservoir tank 11 is disposed in the inside of the footrest 4 and at the end on the body right side, and an end on a body front side and an end on a body rear side are attached to the under cover 22. As shown in Fig. 5, a part where the reservoir tank 11 is attached to the under cover 22 adopts a structure in which a projecting piece 35, which is protrudingly provided in the reservoir tank 11 so as to extend in the longitudinal direction of the body, is placed over a supporting piece 34, which is protrudingly provided on the bottom wall 27 of the under cover 22 so as to extend upward, and is attached by the bolts for attachment 36.

In this embodiment, a bearing surface for attachment 34a formed at the upper end of the supporting piece 34 and the projecting piece 35 are formed so as to incline downward to the right in a state in which the bearing surface for attachment 34a and the projecting piece 35 are viewed from the front of the body. The bearing surface 34a and the projecting piece 35 are inclined in this way because molds with simple structures, which are released in the vertical direction, respectively, are used as an injection mold (not show) for molding the under cover 22 and a blow mold (not shown) for molding the reservoir tank 11.

As shown in Fig. 5, a water storage portion of the reservoir tank 11 is formed to take on an L shape in section and is formed such that the lower end thereof extends to the inside of the body below the rear frames 17 on the right side of the body. In other words, in this reservoir tank 11, a dead space formed between the rear frames 17 and the undercover 22 is used effectively to realize an increase in a volume.

A pipe for water supply 37 is integrally formed at an upper end on the body rear side of this reservoir tank 11 so as to project upward. In this pipe for water supply 37, a cap 38 is detachably attached to a water supply port 37a at an upper end thereof. As shown in Figs. 4 and 5, the pipe for water supply 37 and the cap 38 are led to the outside of the footrest 4 through a through hole 39a of a tray 39 formed in the foot board 21. The tray 39 is formed so as to be adjacent to the body right side of the battery box 32 and is opened and closed by the lid 33 together with the battery box 32.

In other words, the water supply portion (the pipe for water supply 37 and the cap 38) of the reservoir tank 11 is covered from the top thereof by the lid 33 so as not to appear on the exterior of the body usually. In the tray 39 according to this embodiment, a partition wall 40 is vertically provided between the tray 39 an the battery box 32 such that, even if cooling water spills when the cooling water is supplied to the reservoir tank 11, the cooling water never flows into the battery box 32.

As shown in Figs. 3 and 4, a breather pipe 41 is connected to the upper end of the reservoir tank 11 and the vicinity of the front of the pipe for water supply 37. The other end of the reservoir pipe 10, one end of which is connected to the radiator 9, is connected to the lower end of the reservoir tank 11 and the end on the body rear side.

As shown in Figs. 3, 4, and 6, the other end of the breather pipe 41 is held by being inserted into a pipe holder 42 of the under cover 22. This pipe holder 42 is formed integrally with a bottom wall 28 of the under cover 22 and is disposed further in the front of the body than the reservoir tank 11.

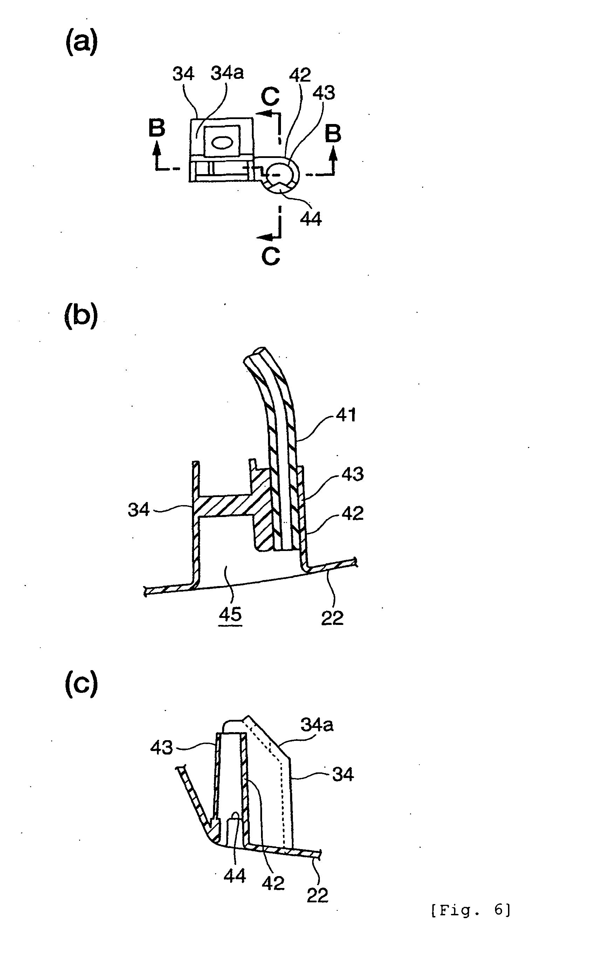

As shown in Fig. 6, this pipe holder 42 includes a pipe section 43 that is formed so as to extend upward integrally with the supporting piece 34 and a stopper 44 that is formed at a lower end of this pipe section 43 so as to project into the pipe. The pipe section 43 is formed so as to take on a C shape in section and is constituted to hold the breather pipe 41 in an elastically deformed state such that an outer diameter of the breather pipe 41 is slightly reduced.

The stopper 44 is a portion for regulating an amount of insertion such that the breather pipe 41 is never projected to a part lower than the pipe holder 42 and is formed such that a tip of the breather pipe inserted into the pipe section 43 comes into abutment against the stopper 44. A position of the tip of the breather pipe 41 is regulated by this stopper 44, whereby it becomes unnecessary to measure an amount of insertion of the breather pipe 41 when the breather pipe 41 is assembled, and workability of mounting work is improved. At the same time, since the breather pipe 41 never projects to a part below the under cover 22, the exterior of the scooter 1 is never spoiled.

As shown in Fig. 6(b), a lower end of the breather pipe 41 according to this embodiment opens to the inside of a space 45 that is formed so as to open downward in the under cover 22. The lower end of the breather pipe 41 is positioned in this space 45, whereby it becomes less likely that an opening at the lower end of the breather pipe 41 is clogged up by mud.

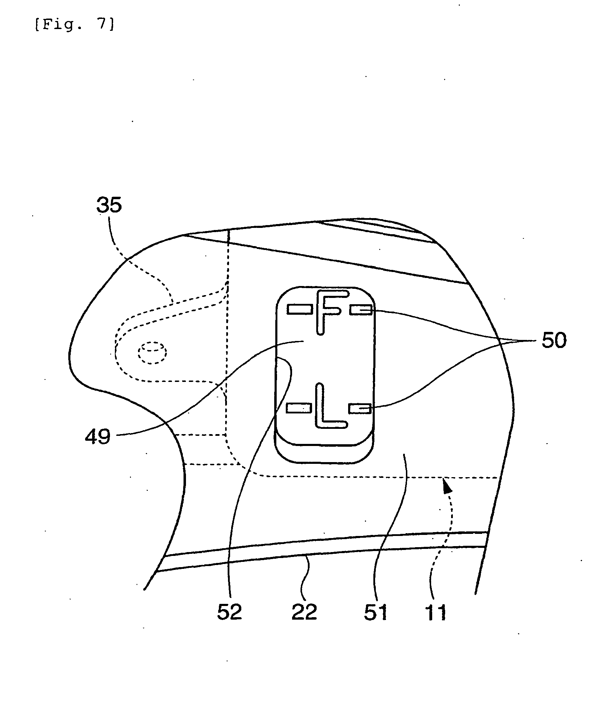

As shown in Fig. 5, a recessed groove 48 holding a main harness 47 is formed on an inner wall 46 on the body inner side of the reservoir tank 11. As shown in Figs. 3 and 7, a level gauge 50 is formed on an outer wall 49 on the body outer side. The recessed groove 48 is formed so as to take on a semicircular shape in section such that the main harness 47 can fit in the recessed groove 48. The main harness 47 is held in the reservoir tank 11 in this way, whereby the number of clamps and holders for holding the main harness can be reduced. Thus, the number of components and the number of work steps are reduced, and reduction in cost can be realized.

The level gauge 50 indicates a position of a water surface in a state in which a reserved amount of cooling water in the reservoir tank 11 has reached an amount of an allowable minimum limit and a position of a water surface in a state in which a reserved amount of the cooling water has reached an amount of an allowable maximum limit. The level gauge 50 is formed at the time of molding using the mold for molding the reservoir tank 11. As shown in Fig. 7, an opening 52 for visual recognition of storage capacity is formed in a sidewall 51 of the under cover 22 opposed to the level gauge 50. The reservoir tank 11 according to this embodiment is formed of a synthetic resin material through which the water surface of the cooling water can be seen. The level gauge 50 and the water surface can be compared through the opening 52.

In the scooter 1 constituted as described above, in order to mount the reservoir tank 11 on the body, the reservoir tank 11 is mounted in a state in which the reservoir tank 11 is assembled to the under cover 22 in advance. In other words, the reservoir tank 11 is assembled to the under cover 22 in advance, and this under cover 22 is attached to the brackets 24 and 25 of the body frame 7, whereby the reservoir tank 11 can be attached to the body frame 7.

Therefore, in performing attachment work for this reservoir tank 11, a worker can easily perform the attachment work holding the relatively large under cover 22.

In addition, in the scooter 1 according to this embodiment, the reservoir tank 11 and the bolts for attachment 26 are covered by the under cover 2 and the foot board 21, and the water supply portion (the pipe for water supply 37 and the cap 38) is covered by the lid 33. Consequently, in this scooter 1, the reservoir tank 11 can be prevented from appearing on the exterior of the body by the footrest 4, which is always provided in this type of a vehicle, and the lid 33 covering the water supply portion. In preventing the bolts for attachment 26 from being exposed to the outside of the body, since a separate small cover is unnecessary other than the under cover 22, reduction in cost can be realized compared with the case in which this small cover is used.

The projecting piece for attachment 35 is provided protrudingly in the longitudinal direction of the body, and the reservoir tank 11 according to this embodiment is attached to the supporting pieces 34, which is formed on the bottom wall of the under cover 22 so as to project upward, via the projecting piece 35. Thus, the projecting piece 34 and the supporting piece 35 are positioned at substantially the same height as the reservoir tank 11. Consequently, it is possible to house the reservoir tank 11 in the inside of the footrest 4 while forming the footrest 4 to be compact in the vertical direction.

In this embodiment, the projecting piece 35 and the bearing surface for attachment 34a incline in the lateral direction of the body. Thus, it is possible to mold the reservoir tank 11 and the under cover 22 with molds, a release direction of which is the vertical direction, respectively. Consequently, it is possible to form both the reservoir tank 11 and the under cover 22 with molds with simple structures compared with the case in which a slide core or the like is used for the molds.

In the under cover 22 according to this embodiment, the opening for visual recognition of storage capacity 52 is formed on the sidewall 51 opposed to the reservoir tank 11. Thus, it is possible to position the level gauge 50 (visually recognized portion) of the reservoir tank 11 with respect to the opening for visual recognition of storage capacity 52 with high accuracy. This is because the opening for visual recognition of storage capacity 52 is formed in the under cover 22 to which the reservoir tank 11 is attached, and positions of the opening 52 and an attaching part of the reservoir tank 11 are determined accurately by a mold.

As described before, the present invention has been devised in order to facilitate attachment work for a reservoir tank using a body cover and preventing the reservoir tank and an attachment part thereof from being exposed to the outside of a body while realizing reduction in cost.

Therefore, a scooter type motorcycle is provided, preferably a scooter type motorcycle that has a low-floor footrest having a foot board and an under cover provided between a front wheel and a rear wheel and is mounted with a water-cooled engine, wherein a reservoir tank is housed in the inside of the footrest, and further preferably this reservoir tank is attached to the under cover in a state in which a water supply portion is covered by a cover that is provided in the foot board so as to be openable and closable.

Therein, a preferably projecting piece for attachment is provided protrudingly in a longitudinal direction of the body and is attached to a supporting piece, which is formed on a bottom wall of the under cover so as to project upward, via the projecting piece.

More preferably, the projecting piece and a bearing surface for attachment of the supporting piece are inclined in a lateral direction of the body.

According to the invention, work for attaching the reservoir tank to a body frame is finished by attaching the under cover to the body frame in a state in which the reservoir tank is attached to the under cover in advance. Therefore, in performing this attachment work, since a component held by a worker is a relatively large under cover, the attachment work can be performed easily compared with the case in which the reservoir tank is directly attached to a bracket of the body frame.

In this scooter type motorcycle, the reservoir tank can be prevented from appearing on an exterior of the body by the footrest, which is always provided in this type of a vehicle, and the cover covering the water supply portion. Thereby, in preventing bolts for attaching the reservoir tank to the under cover from being exposed to the outside of the body, a small cover separate from the under cover is not required, and therefore the number of components and the number of assembly steps are decreased and reduction in cost can be realized.

Therefore, the attachment work for the reservoir tank can be facilitated using the under cover equivalent to the body cover, and the reservoir tank and the attachment part thereof can be prevented from being exposed to the outside of the body while realizing reduction in cost.

Further, since the projecting piece for attaching the reservoir tank to the under cover and the supporting piece are positioned at substantially the same height, the reservoir tank can be housed in the inside of the footrest while forming the footrest to be compact in the vertical direction.

Moreover, the reservoir tank and the under cover can be formed by a mold, a release direction of which is the vertical direction, respectively. Consequently, since a structure of the mold is simplified compared with the case in which a slide core or the like is used, manufacturing cost for the mold can be reduced.

Further, since the opening for visual recognition of storage capacity is formed in the under cover to which the reservoir tank is attached, a visually recognized portion of the reservoir tank can be positioned at high accuracy with respect to the opening for visual recognition of storage capacity. Consequently, the visually recognized portion of the reservoir tank can be visually recognized accurately.

As explained above, for facilitating attachment work for a reservoir tank using a body cover and prevent the reservoir tank and an attaching part of the reservoir tank from being exposed to the outside of a body while realizing reduction in cost, a reservoir tank 11 is housed in the inside of a footrest 4 having a foot board 21 and an under cover 22. In the reservoir tank 11, a pipe for water supply 37 and a cap 38 are covered by a lid 33 provided in the foot board 21 so as to be openable and closable. This reservoir tank 11 is attached to the under cover 22.

## Claims

1. Scooter type motorcycle comprising a water-cooled engine (6), a low-floor footrest (4) having a foot board (21) and an under cover (22) provided between a front wheel (2) and a rear wheel (3), and
a reservoir tank (11) for storing a cooling liquid housed within the footrest (4), wherein a water supply portion (37) of the reservoir tank (11) is covered to the outside of the motorcycle (1) by a detachable cover (33) which forms part of the foot board (21), **characterized in that** the reservoir tank (11) is attached to the under cover (22), and an attachment means (36) is provided for attachment of the reservoir tank (11) to the under cover (22), wherein the attachment means (36) is mounted from an inner side of the under cover (22) in a direction towards an outer side of the under cover (22).

2. Scooter type motorcycle according to claim 1, **characterized in that** the detachable cover (33) covers a battery box (32) to the outside.

3. Scooter type motorcycle according to claim 1 or 2, **characterized in that a** projecting piece (35) for attachment of the reservoir tank (11) to the motorcycle (1) is provided thereon and protrudingly in a longitudinal direction of a motorcycle body, the projecting piece (35) being attached to a supporting piece (34), which is formed on a bottom wall (27) of the under cover (22) so as to project upward.

4. Scooter type motorcycle according to claim 3, **characterized in that** the projecting piece (35) and a bearing surface for attachment of the supporting piece (34) are inclined in a lateral direction of the motorcycle and/or tank body.

5. Scooter type motorcycle according to at least one of the claims 1 to 4, **characterized in that** an end portion of the attachment means (36), to which an attachment tool is applicable, is directed to an inner side of the under cover (22).

6. Scooter type motorcycle according to claim 5, **characterized in that** said attachment means (36) is a bolt.

7. Scooter type motorcycle according to at least one of the claims 1 to 6, **characterized in that** an opening (52) for visual recognition of storage capacity of the reservoir tank (11) is formed on a sidewall (51) opposed to the reservoir tank (11) in the under cover (22).

8. Scooter type motorcycle according to at least one of the claims 1 to 7, **characterized in that** a level gauge (50) indicating a position of an upper surface of a cooling liquid within the reservoir tank (11) is provided at an outer wall (49) of the reservoir tank (11) so as to be visible through an opening (52) formed in a sidewall (51) of an under cover (22) of the motorcycle (1).

9. Scooter type motorcycle according to at least one of the claims 1 to 8, **characterized in that** a water storage portion of the reservoir tank (11) is formed in an L-shape if seen in a cross-sectional view of the motorcycle (1).

10. Scooter type motorcycle according to at least one of the claims 1 to 9, **characterized in that** a lower end of the reservoir tank (11) extends below rear frames (17) of a body of the motorcycle (1), being positioned in a dead space formed between the rear frames (17) and the under cover (22).

11. Scooter type motorcycle according to at least one of the claims 1 to 10, **characterized in that** a water supply pipe (37) is integrally formed at an upper end of the reservoir tank (11), the water supply pipe (37) comprising a water supply part (37a) which is closable by a detachable cap (38).

12. Scooter type motorcycle according to at least one of the claims 1 to 11, **characterized in that** a recessed groove (48) for holding a main harness (47) is formed on an inner side wall (46) of the reservoir tank (11).

## Patentansprüche

1. Motorrad vom Roller- Typ, aufweisend eine wassergekühlte Brennkraftmaschine (6), eine Unterboden- Fußstütze (4) mit einem Trittbrett (21) und einer unteren Abdeckung (22), vorgesehen zwischen einem Vorderrad (2) und einem Hinterrad (3), und
einen Speichertank (11) zum Speichern einer Kühlflüssigkeit, untergebracht innerhalb der Fußstütze (4), wobei ein Wasserzuführungsabschnitt (37) des Speichertanks (11) nach außen des Motorrades (1) durch eine lösbare Abdeckung (33) abgedeckt ist, die einen Teil der Trittbrettes (21) bildet,
**dadurch gekennzeichnet, dass** der Speichertank (11) mit der unteren Abdeckung (22) verbunden ist und eine Verbindungseinrichtung (36) zum Befestigen des Speichertanks (11) an der unteren Abdeckung (22) vorgesehen ist, wobei das Verbindungsmittel (36) von einer Innenseite der unteren Abdeckung (22) in einer Richtung zu einer Außenseite der unteren Abdeckung (22) montiert ist.

2. Motorrad vom Roller- Typ nach Anspruch 1, **dadurch gekennzeichnet, dass** die lösbare Abdeckung (33) einen Batteriekasten (32) zu der Außenseite abdeckt.

3. Motorrad vom Roller- Typ nach Anspruch 1 oder 2, **dadurch gekennzeichnet, dass** ein Vorsprungsstück (35) zum Verbinden des Speichertanks (11) mit dem Motorrad (1) daran vorgesehen und in einer Längsrichtung einer Motorradkarosserie vorspringend ist, wobei das Vorsprungsstück (35) mit einem Lagerstück (34), das an einer Bodenwand (27) der unteren Abdeckung (22) gebildet ist, verbunden ist, um nach oben vorzuspringen.

4. Motorrad vom Roller- Typ nach Anspruch 3, **dadurch gekennzeichnet, dass** das Vorsprungsstück (35) und eine Lageroberfläche zum Verbinden des Lagerstückes (34) in einer seitlichen Richtung des Motorrades und / oder des Tankkörpers geneigt sind.

5. Motorrad vom Roller- Typ nach zumindest einem der Ansprüche 1 bis 4, **dadurch gekennzeichnet, dass** ein Endabschnitt der Verbindungseinrichtung (36), an der ein Verbindungswerkzeug anwendbar ist, zu einer Innenseite der unteren Abdeckung (22) gerichtet ist.

6. Motorrad vom Roller- Typ nach Anspruch 5, **dadurch gekennzeichnet, dass** die Verbindungseinrichtung (36) eine Schraube ist.

7. Motorrad vom Roller- Typ nach zumindest einem der Ansprüche 1 bis 6, **dadurch gekennzeichnet, dass** eine Öffnung (52) zur visuellen Wahrnehmung der Speicherkapazität des Speichertanks (11) in einer Seitenwand (51), gegenüberliegend zu dem Speichertank (11) in der unteren Abdeckung (22), gebildet ist.

8. Motorrad vom Roller- Typ nach zumindest einem der Ansprüche 1 bis 7, **dadurch gekennzeichnet, dass** eine Niveaumesseinrichtung (50), die eine Position einer oberen Oberfläche einer Kühlflüssigkeit innerhalb des Speichertanks (11) anzeigt, an einer Außenwand (49) des Speichertanks (11) vorgesehen ist, um durch eine Öffnung (52), gebildet in der Seitenwand (51) einer unteren Abdeckung (22) des Motorrades (1), sichtbar zu sein.

9. Motorrad vom Roller- Typ nach zumindest einem der Ansprüche 1 bis 8, **dadurch gekennzeichnet, dass** ein Wasserspeicherabschnitt des Speichertanks (11) in einer L- Form gebildet ist, wenn in einer Querschnittsansicht des Motorrades (1) gesehen.

10. Motorrad vom Roller- Typ nach zumindest einem der Ansprüche 1 bis 4, **dadurch gekennzeichnet, dass** sich ein unteres Ende des Speichertanks (11) unter die Hinterrahmen (17) einer Karosserie des Motorrades (1) erstreckt, der in einem toten Raum, gebildet zwischen den Hinterrahmen (17) und der unteren Abdeckung (22) positioniert ist.

11. Motorrad vom Roller- Typ nach zumindest einem der Ansprüche 1 bis 10, **dadurch gekennzeichnet, dass** ein Wasserzuführungsrohr (37) einstückig an einem oberen Ende des Speichertanks (11) gebildet ist, wobei das Wasserzuführungsrohr (37) ein Wasserzuführungsteil (37a) aufweist, das durch eine lösbare Kappe (38) verschließbar ist.

12. Motorrad vom Roller- Typ nach zumindest einem der Ansprüche 1 bis 11, **dadurch gekennzeichnet, dass** eine ausgesparte Nut (48) zum Halten eines Hauptkabelbaumes (47) an einer inneren Seitenwand (46) des Speichertanks (11) gebildet ist.

## Revendications

1. Motocyclette de type scooter comprenant un moteur refroidi par eau (6), un repose pieds à plancher surbaissé (4) comportant un panneau de pieds (21) et une couverture inférieure (22) disposés entre une roue avant (2) et une roue arrière (3), et
- un réservoir (11) pour stocker un liquide de refroidissement logé dans le repose pieds (4), dans laquelle une partie d'alimentation en eau (37) du réservoir (11) est couverte de l'extérieur de la motocyclette (1) par un couvercle amovible (33) formant une partie du panneau de pieds (21),
- **caractérisée en ce que** le réservoir (11) est fixé à la couverture inférieure (22) et que des moyens de fixation (36) sont prévus pour la fixation du réservoir (11) à la couverture inférieure (22), dans laquelle les moyens de fixation (36) sont montés depuis un côté intérieur de la couverture inférieure (22) dans la direction d'un côté extérieur de la couverture inférieure (22).

2. Motocyclette de type scooter selon la revendication 1, **caractérisée en ce que** le couvercle amovible (33) couvre un caisson de batterie (32) de l'extérieur.

3. Motocyclette de type scooter selon les revendications 1 ou 2, **caractérisée en ce qu**'une pièce se projetant (35) pour la fixation du réservoir (11) à la motocyclette (1) est disposée sur celle-ci et en saillie dans la direction longitudinale d'une carrosserie de motocyclette, la pièce se projetant (35) étant fixée à une pièce de support (34), qui est formée sur une paroi inférieure (27) de la couverture inférieure (22) de manière à se projeter vers le haut.

4. Motocyclette de type scooter selon la revendication 3, **caractérisée en ce que** la pièce se projetant (35) et une surface d'appui pour la fixation de la pièce de support (34) sont inclinées dans une direction latérale de la motocyclette et/ou du corps de réservoir.

5. Motocyclette de type scooter selon au moins une des revendications 1 à 4, **caractérisée en ce qu**'une partie d'extrémité des moyens de fixation (36), à laquelle un outil de fixation peut être appliqué, est dirigée vers un côté intérieur de la couverture inférieure (22).

6. Motocyclette de type scooter selon la revendication 5, **caractérisée en ce que** lesdits moyens de fixation (36) sont un boulon.

7. Motocyclette de type scooter selon au moins une des revendications 1 à 6, **caractérisée en ce qu**'une ouverture (52) pour une reconnaissance visuelle de la capacité de stockage du réservoir (11) est ménagée sur une paroi latérale (51) opposée au réservoir (11) dans la couverture inférieure (22).

8. Motocyclette de type scooter selon au moins une des revendications 1 à 7, **caractérisée en ce qu**'une jauge de niveau (50) indiquant une position de la surface supérieure d'un liquide de refroidissement dans le réservoir (11) est prévue sur une paroi extérieure (49) du réservoir (11) de manière à être visible à travers une ouverture (52) ménagée dans une paroi latérale (51) d'une couverture inférieure (22) de la motocyclette (1).

9. Motocyclette de type scooter selon au moins une des revendications 1 à 8, **caractérisée en ce qu**'une partie de stockage d'eau du réservoir (11) est conformée en une forme de L si elle est vue sur une section transversale de la motocyclette (1).

10. Motocyclette de type scooter selon au moins une des revendications 1 à 9, **caractérisée en ce qu**'une extrémité inférieure du réservoir (11) s'étend au-dessous de bâtis arrière (17) d'une carrosserie de la motocyclette (1), étant positionnée dans un espace mort formé entre les bâtis arrière (17) et la couverture inférieure (22).

11. Motocyclette de type scooter selon au moins une des revendications 1 à 10, **caractérisée en ce qu**'une conduite d'alimentation en eau (37) est formée de manière intégrale à une extrémité supérieure du réservoir (11), la conduite d'alimentation en eau (37) comprenant une partie d'alimentation en eau (37a) qui peut être fermée par un capuchon amovible (38).

12. Motocyclette de type scooter selon au moins une des revendications 1 à 11, **caractérisée en ce qu**'une rainure évidée (48) pour maintenir un harnais principal (47) est ménagée dans une paroi latérale intérieure (46) du réservoir (11).
